# FASCICULE DE BREVET EUROPEEN

(11) **EP 1 888 813 B1**
(45) Date de publication et mention de la délivrance du brevet: **15.07.2009**
(21) Numéro de dépôt: 06794422.3
(22) Date de dépôt: 12.05.2006
(51) Int. Cl.: C23C 18/16

(54) **PROCEDE DE DENSIFICATION RAPIDE D'UN SUBSTRAT FIBREUX POREUX PAR FORMATION D'UN DEPOT SOLIDE AU SEIN DE LA POROSITE DU SUBSTRAT**
VERFAHREN ZUR SCHNELLEN VERDICHTUNG EINES PORÖSEN FASERSUBSTRATS MIT BILDUNG EINER FESTEN ABLAGE INNERHALB DER SUBSTRATPOROSITÄT
METHOD FOR THE RAPID DENSIFICATION OF A POROUS FIBROUS SUBSTRATE, COMPRISING THE FORMATION OF A SOLID DEPOSIT WITHIN THE POROSITY OF THE SUBSTRATE

(30) Priorité: 13.05.2005 FR 0504813
(43) Date de publication de la demande: 20.02.2008
(73) Titulaire: Snecma Propulsion Solide, Société Anonyme, 33187 Le Haillan Cedex (FR)
(72) Inventeur: GUETTE, Alain, F-33110 Le Bouscat (FR); PAILLER, René, F-33610 Cestas (FR); EBERLIN-FLUX, Nicolas, F-33400 Talence (FR); CHRISTIN, François, F-33160 Saint Aubin de Medoc (FR)
(74) Mandataire: Joly, Jean-Jacques
(86) Numéro de dépôt international: PCT/FR2006/050437
(87) Numéro de publication internationale: WO 2007/003813

(56) Documents cités:
- EP-A2- 0 357 176
- WO-A-97/44294
- JP-A- 9 245 778

## Description

### Arrière-plan de l'invention

L'invention est relative à la formation de dépôts solides de matrice au sein de la porosité de substrats poreux en utilisant une composition fluide contenant un fluide précurseur du matériau du dépôt solide à former et un fluide de dilution éventuel.

L'invention vise la densification de substrats poreux par formation de dépôts au coeur de la porosité de ceux-ci, et non la formation de revêtements de surface.

L'invention est utilisable pour la densification de substrats poreux par un dépôt solide de matrice au sein de la porosité des substrats, en particulier pour la réalisation de pièces en matériau composite par densification de substrats poreux de renfort du matériau composite, typiquement des substrats fibreux. Plus particulièrement, l'invention vise la réalisation de pièces en matériau composite thermostructural ayant un renfort en fibres réfractaires (carbone ou céramique) densifié par une matrice réfractaire (carbone ou céramique). Des matériaux thermostructuraux typiques sont les matériaux composites carbone/carbone, ou C/C (fibres et matrice en carbone), et les matériaux composites à matrice céramique, ou CMC. Ils possèdent les propriétés mécaniques requises pour constituer des éléments de structure et ont la capacité de conserver ces propriétés aux températures élevées.

Les procédés d'infiltration chimique en phase gazeuse, ou procédés CVI ("Chemical Vapour Infiltration") sont bien connus et utilisés couramment pour densifier des substrats poreux par un matériau solide. Les substrats à densifier sont placés dans un four dans lequel est admise une phase gazeuse réactionnelle qui, dans des conditions de température et de pression déterminées, permet de former directement le dépôt solide souhaité par décomposition de la phase gazeuse réactionnelle ou par réaction entre plusieurs de ses constituants.

Les procédés CVI, notamment pour la formation de matrice en carbone ou en céramique, sont couramment mis en oeuvre à une température d'environ 900°C à 1100°C et sous une pression réduite inférieure à 100 kPa, typiquement comprise entre 1 kPa et 50 kPa. En effet, une faible pression est préconisée pour favoriser la diffusion de la phase gazeuse au coeur des substrats et éviter une trop rapide obturation de la porosité de surface empêchant la poursuite de la densification au coeur des substrats et se traduisant par un fort gradient de densification au sein des substrats.

Pour la densification de substrats poreux, il est connu également d'utiliser des procédés de densification par voie liquide qui consistent à imprégner les substrats par une composition liquide contenant un précurseur du matériau de matrice à former, puis à transformer le précurseur. Le précurseur est typiquement une résine ou un brai utilisé directement ou mis en solution dans un solvant pour réaliser l'imprégnation des substrats. Après séchage (élimination du solvant) et réticulation de la résine, le dépôt solide de matrice est obtenu par traitement thermique de pyrolyse de la résine.

Les processus connus de densification par voie gazeuse ou liquide sont généralement longs ou très longs et par conséquent coûteux. En effet, une densification de substrats par CVI peut durer plusieurs dizaines, voire plusieurs centaines d'heures, tandis qu'une densification par voie liquide nécessite la répétition du cycle d'imprégnation, séchage, réticulation et pyrolyse.

L'utilisation d'un fluide à l'état supercritique dans un processus de densification d'un substrat poreux est décrite dans l'art antérieur. Le document US 4 552 786 divulgue un procédé de densification d'un substrat céramique poreux comprenant la mise en solution d'un précurseur de céramique dans un fluide (propane) qui est porté à l'état supercritique pour pénétrer avec le précurseur dans la porosité du substrat, et la libération du précurseur liquide au sein de cette porosité par retour vers des conditions non-supercritiques qui s'accompagne d'une diminution du pouvoir de dilution du propane. La transformation du précurseur liquide en céramique est ensuite réalisée par traitement thermique. Il s'agit donc en fait d'un processus de densification par voie liquide, le fluide à l'état supercritique n'étant utilisé que pour faire pénétrer le précurseur liquide dans le substrat poreux.

Le document CN 1377855A divulgue un procédé similaire dans lequel des charges solides (carbone ou carbure de silicium) sont ajoutées au précurseur liquide de céramique pour réduire la durée de densification du substrat.

Les documents US 5 789 027 et US 6 689 700 décrivent des procédés de formation de dépôts solides sur une surface par dissolution d'un précurseur du matériau à déposer dans un solvant à l'état supercritique, exposition du substrat à cette solution dans des conditions dans lesquelles le précurseur est à l'état stable, et introduction dans la solution d'un agent de réaction pour déclencheur une réaction chimique impliquant le précurseur et provoquant le dépôt du matériau sur la surface du substrat. L'application visée est le dépôt sur des substrats de films en métal, oxyde métallique ou semi-conducteur. Un processus de ce type est envisagé dans le document US 5 789 027 pour déposer aussi un matériau dans un substrat microporeux ou nanoporeux, mais sans description précise d'une mise en oeuvre. On note que le substrat est maintenu à une température relativement basse, environ 200°C, qui peut être suffisante pour assurer une polymérisation mais trop basse pour permettre la formation de céramique ou de carbone.

La densification à coeur d'un substrat poreux de type fibreux, donc macroporeux (à savoir une taille de pores de quelques dizaines à quelques centaines de microns) n'est pas envisagée dans ces deux derniers documents. Le dépôt d'un matériau dans un substrat microporeux (dimension de pores de l'ordre du micron) ou nanoporeux (dimension de pores de quelques nanomètres à quelques centaines de nanomètres) n'est réalisé que sur une profondeur limitée, proche de la surface. On note à ce propos que le document US 6 689 700 décrit l'utilisation de la photolyse qui ne peut se produire qu'en surface.

En outre, ce procédé connu impose des conditions dans lesquelles le précurseur reste stable jusqu'à initiation de la réaction de dépôt par amenée d'un agent de réaction, c'est-à-dire impose une limite de la température du substrat à au plus 250°C, voire 300°C.

De plus, une introduction séparée d'un agent de réaction doit être prévue.

Le document EP 0 357 176 divulgue la formation d'un corps en céramique par infiltration d'un agglomérat de poudre de céramique par un précurseur de céramique amené dans une composition à l'état supercritique, introduction ensuite d'un agent de réaction à l'état supercritique pour transformer le précurseur en céramique et frittage du corps vert obtenu.

Le document JP 09-245778 décrit la réalisation d'une électrode par dépôt dans la porosité d'un substrat métallique poreux d'un sel métallique amené en solution à l'état supercritique et hydrolyse ensuite par de l'eau amenée aussi à l'état supercritique.

La modification d'un ciment par amenée dans la matrice d'un ou plusieurs éléments ou extraction d'un élément en utilisant un véhicule à l'état supercritique est par ailleurs décrite dans le document WO 97/44294.

### Objet et résumé de l'invention

L'invention a pour but de proposer un procédé permettant d'infiltrer à coeur et de façon accélérée un dépôt solide de matrice au sein de la porosité d'un substrat réfractaire.

Ce but est atteint par un procédé tel que défini dans la revendication 1.

Par substrat fibreux poreux réfractaire, on entend un substrat formé à partir de fibres de carbone ou de céramique, et par matrice réfractaire, on entend une matrice en carbone et/ou en céramique.

Typiquement, la formation du dépôt solide de matrice est réalisée à une température de substrats poreux supérieure à 600°C, de préférence comprise entre 600°C et 1500°C. Quant à la pression, elle est supérieure à la pression P_{c} du point critique du fluide de dilution et/ou du fluide précurseur.

Comme cela sera montré plus loin, la formation de dépôt solide de matrice par infiltration chimique en phase supercritique est considérablement plus rapide qu'avec les processus connus de type CVI. En outre, et de façon particulièrement surprenante, elle est effective à des pressions bien supérieures à celles couramment utilisées pour les processus connus de type CVI.

En particulier dans le cas d'un fluide précurseur très peu réactif, la présence d'un fluide de dilution peut ne pas être nécessaire. Sinon, la composition fluide peut comprendre au moins un fluide réactif précurseur du matériau du dépôt solide de matrice à former et un fluide de dilution afin d'obtenir le dépôt solide de matrice souhaité et éviter un phénomène de nucléation en phase homogène avec formation de poudre dans la phase supercritique.

Le taux molaire initial du fluide de dilution dans la composition peut être choisi relativement élevé, par exemple jusqu'à 90% voire plus.

Le fluide de dilution peut être un fluide neutre chimiquement vis-à-vis de la formation du dépôt solide, par exemple choisi parmi les gaz rares de l'atmosphère, ou peut être un fluide réactif pour la formation du dépôt solide, par exemple choisi parmi l'azote et le dioxyde de carbone.

En outre, le gaz réactif peut, tout comme le gaz de dilution, être à l'état supercritique pendant le dépôt ou l'infiltration.

Le procédé d'infiltration chimique en phase supercritique selon l'invention peut être réalisé en enceinte fermée ou avec circulation continue de la composition fluide.

Dans le premier cas, le procédé comprend les étapes d'introduction d'une quantité de composition fluide dans une enceinte contenant le substrat et d'établissement dans l'enceinte de conditions de température et de pression permettant de former directement et spontanément le dépôt solide de matrice tout en maintenant à l'état supercritique le fluide réactif et/ou le fluide de dilution éventuellement présent.

Dans le deuxième cas, le procédé comprend les étapes d'admission continue d'un flux de composition fluide dans une enceinte contenant le substrat, d'extraction continue d'un flux de fluide effluent hors de l'enceinte et de maintien de conditions de température du substrat et de pression dans l'enceinte permettant de former directement et spontanément le dépôt solide de matrice tout en maintenant à l'état supercritique le fluide réactif et/ou le fluide de dilution éventuellement présent.

### Brève description des dessins

D'autres particularités et avantages de l'invention ressortiront à la lecture de la description faite ci-après, à titre indicatif mais non limitatif, en référence aux dessins annexés, sur lesquels :
- la figure 1 est une vue très schématique d'une installation permettant la mise en oeuvre d'un procédé d'infiltration chimique en phase supercritique conforme à l'invention avec gradient de température ;
- les figures 2 et 3 sont des vues très schématiques montrant des variantes de l'installation de la figure 1 ;
- la figure 4 est une vue très schématique d'une installation permettant la mise en oeuvre d'un procédé d'infiltration chimique en phase supercritique conforme à l'invention, dans des conditions isothermes ou quasi isothermes ;
- la figure 5 est une vue très schématique d'une variante de l'installation de la figure 4 ; et
- les figures 6 à 16 sont des micrographies montrant des dépôts solides de matrice obtenus par des procédés d'infiltration chimique en phase supercritique conformes à l'invention.

### Description détaillée de modes de réalisation de l'invention

Comme cela est bien connu, un fluide est à l'état supercritique lorsque sa température et sa pression excèdent celles du point critique pour le fluide considéré. La densité du fluide à l'état supercritique est comparable à celle de la phase liquide mais son comportement se rapproche de celui de la phase gazeuse en termes de viscosité et de diffusivité. En outre, à l'état supercritique, le pouvoir solvant est fortement accru.

Fondamentalement, le procédé d'infiltration chimique en phase supercritique conforme à l'invention consiste à mettre en présence un substrat poreux à densifier par un dépôt solide, avec une composition fluide comprenant un fluide précurseur du dépôt à former et, éventuellement, un fluide de dilution ou de mise en solution du fluide précurseur, les conditions de pression et de température étant telles que le fluide réactif et/ou de dilution éventuellement présent est ou sont à l'état supercritique et la réaction chimique de formation du dépôt solide se produisant spontanément.

La présence du fluide de dilution permet d'éviter, lors de la phase supercritique, des phénomènes de nucléation en phase homogène, avec formation de poudre, au lieu d'un dépôt continu souhaité. Toutefois, lorsque le fluide réactif n'est que faiblement réactif, il peut remplir de lui-même la fonction de dilution de sorte que l'ajout d'un fluide de dilution peut ne pas être nécessaire.

Lorsqu'il est présent, le fluide de dilution peut être un fluide neutre chimiquement vis-à-vis de la réaction de formation du dépôt solide, c'est-à-dire qui n'intervient pas dans cette réaction chimique. On pourra utiliser un gaz rare de l'air, par exemple de l'argon.

Le fluide de dilution peut aussi être un fluide réactif, c'est-à-dire participant à la réaction chimique de formation du dépôt. On pourra utiliser l'azote (qui peut donner lieu à des réactions d'oxydo-réduction) et le dioxyde de carbone.

Le fluide précurseur est sélectionné en fonction de la nature de la matrice réfractaire à former. On peut choisir les précurseurs qui sont couramment utilisés dans les processus classiques CVI, par exemple des hydrocarbures précurseurs de carbone pour la formation de matrice en carbone ou des composés précurseurs du bore et/ou du silicium pour la formation de matrice en céramique.

Selon les caractéristiques du point critique du fluide précurseur, celui-ci pourra ou non être à l'état supercritique en même temps que le fluide de dilution.

Le taux de dilution du fluide précurseur est choisi assez élevé pour éviter les phénomènes précités de nucléation en phase homogène et une obturation prématurée de l'accès au coeur de la porosité du substrat. Ainsi, on pourra choisir pour le taux molaire initial du fluide de dilution dans la composition fluide une valeur pouvant atteindre 90%, voire plus.

La pression et la température pour la formation du dépôt solide de matrice sont choisies en fonction de la pression (P_{c}) et de la température (T_{c}) du point critique du fluide de dilution et/ou du point critique du fluide précurseur (notamment lorsque ce dernier est utilisé pur, sans fluide de dilution), la température devant être également choisie à une valeur suffisante pour permettre la réaction chimique spontanée de dépôt à partir du fluide précurseur.

Le procédé d'infiltration chimique en phase supercritique est mis en oeuvre sur un substrat fibreux poreux réfractaire, c'est-à-dire un substrat formé à partir de fibres réfractaires, en carbone ou en céramique. Le substrat peut être mis en forme, pour constituer une préforme fibreuse dont la forme est voisine de celle d'une pièce en matériau composite à réaliser. Le substrat peut être consolidé avant infiltration chimique en phase supercritique. La consolidation consiste en une densification partielle limitée du substrat, suffisante pour lier les fibres entre elles de sorte que le substrat peut être manipulé tout en conservant sa forme sans l'aide d'outillage de maintien. La consolidation par densification partielle peut être réalisée par voie liquide, comme connu en soi.

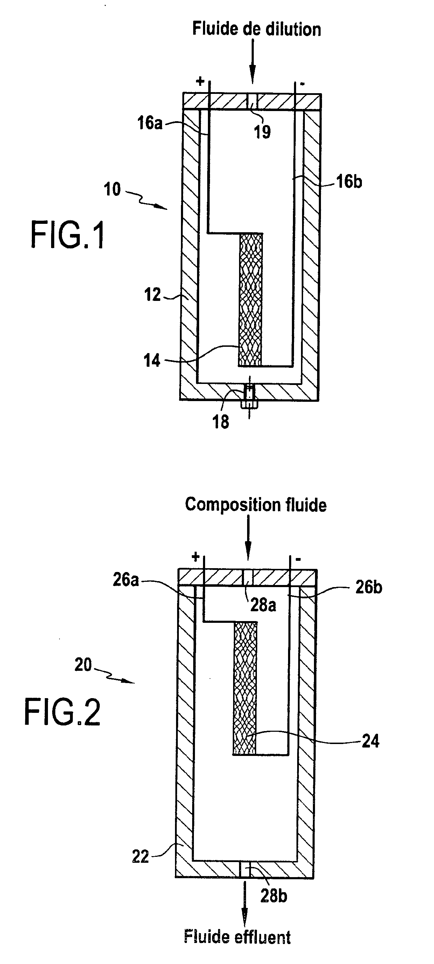

Le procédé d'infiltration chimique en phase supercritique peut être mis en oeuvre en mode fermé (ou "batch") et avec gradient de température au moyen d'un réacteur 10 tel que montré schématiquement sur la figure 1.

Le réacteur 10 a son volume interne délimité par une enceinte 12, par exemple en matériau métallique, tel qu'un superalliage à base de nickel de type « Inconel ». Dans le cas d'un substrat fibreux poreux 14 conducteur de l'électricité, par exemple un substrat en fibres de carbone ou graphite, ou revêtues de carbone ou de graphite, le chauffage du substrat peut être réalisé par effet Joule. Le substrat 14 est relié électriquement à un circuit d'alimentation électrique externe (non représenté) par des électrodes 16a, 16b traversant le couvercle du réacteur.

Le fluide précurseur, qui peut être à l'état liquide, est introduit dans le réacteur à la base de celui-ci à travers un accès 18. Celui-ci est obturé et la mise en pression du réacteur est réalisée par introduction du fluide de dilution à travers une ouverture 19 formée par exemple dans le couvercle du réacteur, tandis que le substrat est chauffé. En l'absence de fluide de dilution, on peut introduire le fluide précurseur à travers l'une des ouvertures et le porter à la pression voulue.

En raison du refroidissement par rayonnement et convection au niveau des surfaces exposées du substrat 14, un gradient thermique s'établit entre une partie de coeur, plus chaude, du substrat et des parties de celui-ci proches de sa surface extérieure. La densification du substrat est donc favorisée initialement à coeur et progresse vers la surface extérieure comme cela est bien connu pour les processus d'infiltration chimique à gradient de température.

En variante, le procédé peut être mis en oeuvre en mode ouvert (ou continu) au moyen d'un réacteur 20 te! que montré schématiquement sur la figure 2.

Le réacteur 20 a son volume interne délimité par des parois 22, par exemple en « Inconel ». Dans le cas d'un substrat fibreux poreux 24 conducteur de l'électricité, le chauffage du substrat pourra être réalisé par effet Joule en reliant le substrat à un circuit (non représenté) d'alimentation électrique par l'intermédiaire d'électrodes 26a, 26b traversant le couvercle du réacteur.

Le réacteur 20 comprend une ouverture d'entrée 28a formée dans son couvercle pour l'admission dans le réacteur de la composition contenant le fluide précurseur et le fluide de dilution éventuel et une ouverture de sortie 28b formée dans la base du réacteur pour l'extraction d'un fluide effluent, la circulation de la composition se faisant à travers le réacteur tout en maintenant celui-ci à la pression voulue.

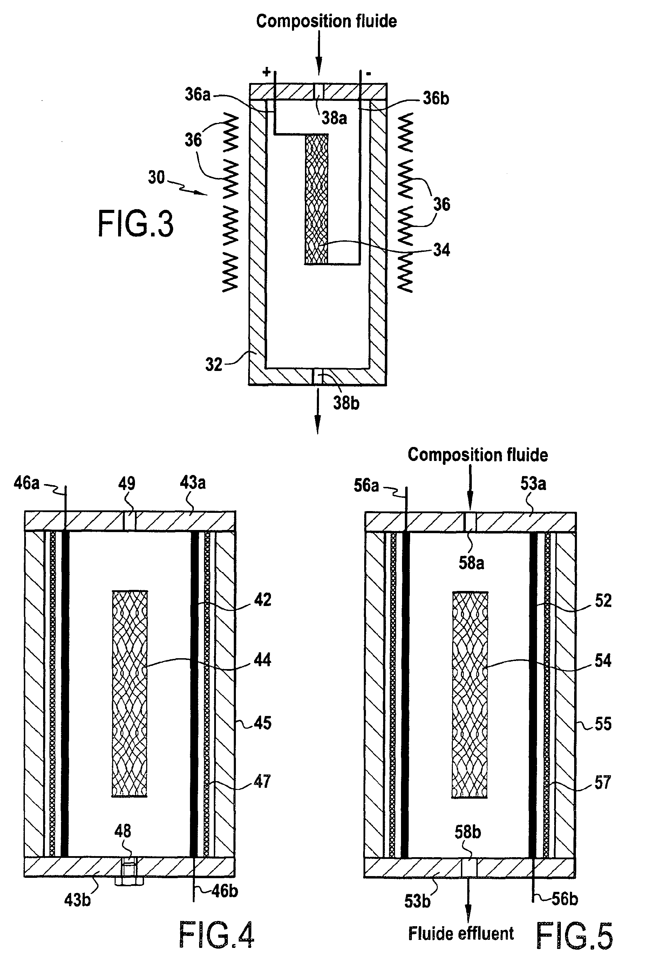

La figure 3 montre schématiquement un réacteur 30 permettant aussi la mise en oeuvre du procédé en mode ouvert et se distinguant du réacteur 20 en ce que des résistances électriques de chauffage 36 sont disposées à l'extérieur du réacteur 30, à proximité des parois 32 de celui-ci. Dans le cas d'un substrat fibreux poreux 34 conducteur de l'électricité, le chauffage du substrat pourra être réalisé au moins en partie par effet Joule en reliant le substrat à un circuit (non représenté) d'alimentation électrique par l'intermédiaire d'électrodes 36a, 36b traversant le couvercle du réacteur.

Le réacteur 30 comprend une ouverture d'entrée 38a formée dans son couvercle et une ouverture de sortie 38b formée dans sa base pour permettre une circulation en continu avec admission de la composition contenant le fluide précurseur et le fluide de dilution éventuel et extraction de fluide effluent.

Les résistances électriques 36 sont réparties sur la hauteur du réacteur. Elles peuvent être alimentées séparément en courant électrique pour permettre un contrôle des gradients de température entre les parois du réacteur 20 et le substrat 24, donc un contrôle des mouvements de convection de la composition fluide introduite dans le réacteur afin de minimiser l'hétérogénéité de température de cette composition dans le réacteur.

En variante, le chauffage direct du substrat électriquement conducteur dans les modes de réalisation des figures 1 à 3 pourra être réalisé non pas par effet Joule par raccordement à une alimentation électrique, mais par couplage inductif avec un inducteur. L'inducteur entoure alors le substrat avec de préférence interposition d'un écran isolant thermique, l'ensemble étant logé dans une enveloppe métallique, par exemple en « Inconel » pour supporter la pression nécessaire à la phase supercritique. Plusieurs substrats pourront être densifiés simultanément, le ou les substrats étant par exemple supportés par un ou plusieurs plateau(x) non conducteur(s).

La figure 4 illustre un réacteur 40 permettant la mise en oeuvre en mode fermé d'un procédé selon l'invention avec chauffage uniforme ou quasi uniforme du substrat, c'est-à-dire dans des conditions isothermes ou quasi isothermes ou en absence ou quasi absence de gradient de température au sein du substrat.

Le réacteur proprement dit 40 est délimité par une paroi latérale 42 en matériau électriquement conducteur, par exemple en graphite, entourant le substrat fibreux poreux 44, et par un couvercle 43a et une base 43b. La paroi 42 est chauffée par exemple par effet Joule en reliant les extrémités de la paroi 42 à une source d'alimentation électrique par l'intermédiaire d'électrodes 46a, 46b traversant le couvercle 43a et la base 43b, permettant le chauffage du volume du réacteur 40 et du substrat 44. Un isolant thermique 47 est interposé entre la paroi 42 et la paroi 45.

Une enveloppe métallique 45, par exemple en « Inconel », capable de supporter la pression nécessaire à la phase supercritique, entoure la paroi 42 et se raccorde au couvercle 43a et à la base 43b qui peuvent être dans le même matériau que l'enveloppe 45.

Une ouverture 48 est formée dans la base 43b pour permettre l'introduction dans le réacteur de fluide précurseur, qui peut être à l'état liquide. Après obturation de l'ouverture 48, la mise sous pression du réacteur peut être réalisée par introduction de fluide de dilution à travers une ouverture 49 formée dans le couvercle 43b. En l'absence de fluide de dilution, le fluide précurseur peut être introduit à travers l'ouverture 48 puis être porté à la pression voulue.

La figure 5 illustre un réacteur 50 permettant la mise en oeuvre en mode ouvert d'un procédé selon l'invention dans des conditions isothermes ou quasi isothermes.

Le réacteur 50 a son volume interne délimité par une paroi latérale 52 en matériau électriquement conducteur, par exemple en graphite, entourant un substrat fibreux poreux 54 à densifier. Le réacteur 50 est fermé par un couvercle 53a et une base 53b à ses parties inférieure et supérieure. La paroi 52 est chauffée par effet Joule par raccordement à une source d'alimentation électrique (non représentée) au moyen d'électrodes 56a, 56b traversant le couvercle 53a et la base 53b, respectivement, permettant le chauffage du volume du réacteur 50 et du substrat 54. Un isolant thermique 57 est interposé entre la paroi 52 et la paroi 55.

Une enveloppe métallique 55, par exemple en « Inconel », capable de supporter la pression nécessaire à la phase supercritique, entoure la paroi 52 et se raccorde au couvercle 53a et à la base 53b qui peuvent être dans le même matériau que l'enveloppe 55.

Une ouverture d'entrée 58a est formée dans le couvercle 53a pour l'admission dans le réacteur de la composition contenant le fluide précurseur et le fluide de dilution éventuel et une ouverture de sortie 58b est formée dans la base 53b du réacteur pour l'extraction d'un fluide effluent, la circulation de la composition se faisant en continu à travers le réacteur tout en maintenant celui-ci à la pression voulue.

Dans les modes de réalisation des figures 4 et 5, le substrat pourra être supporté en étant suspendu au couvercle du réacteur. Il est possible aussi de disposer le substrat sur un plateau, et de densifier simultanément plusieurs substrats supportés par un ou plusieurs plateau(x).

En variante, dans les modes de réalisation des figures 4 et 5, on pourra utiliser un réacteur ayant une paroi latérale formant suscepteur chauffé par couplage inductif avec un inducteur qui l'entoure. La paroi du réacteur peut par exemple être en graphite. L'ensemble suscepteur-inducteur est alors logé dans une enveloppe métallique, par exemple en « Inconel » pour supporter la pression nécessaire à la phase supercritique. L'inducteur peut être en plusieurs segments commandés individuellement pour contrôler les gradients de température dans le réacteur.

Bien entendu, les différents modes de chauffage décrits plus haut (résistif direct, résistif externe et inductif) pourront être utilisés, seuls ou en combinaison, que ce soit pour un réacteur fonctionnant en mode ouvert ou pour un réacteur fonctionnant en mode fermé, et que ce soit pour un procédé à gradient de température ou pour un procédé isotherme.

### Exemple 1

Un réacteur de laboratoire tel que celui de la figure 1, de capacité volumique 0.5 I, a été utilisé pour la densification par une matrice d'un substrat poreux constitué par une préforme fibreuse en fibres de carbone. On a utilisé une préforme formée de couches fibreuses superposées liées entre elles par tissage tridimensionnel (3D) et ayant une forme parallélépipédique avec une grande face d'environ 8 cm² et une épaisseur d'environ 3 mm. Après avoir vidé le réacteur de l'air qu'il contient, du méthane (CH₄) a été introduit comme gaz précurseur de carbone.

La pression initiale dans le four a été fixée à 5 MPa. Elle s'est élevée d'elle-même progressivement jusqu'à environ 9 MPa (dû à un accroissement de la température et à la production de di-hydrogène), de sorte que le fluide est resté à l'état supercritique pendant toute la durée de l'infiltration (la pression Pc et la température Tc au point critique du méthane étant Pc = 4.6 MPa et Tc = -83°C). Le chauffage du substrat a été effectué avec une montée en température de la température ambiante jusqu'à la température désirée. Dès que la température désirée au centre du substrat a été obtenue, le temps de l'infiltration a été fixé à 10 minutes. Un gradient de température a été présent au sein du substrat poreux.

Une étude de l'infiltration des substrats poreux en fonction de la température T au centre du substrat (900°C, 1000°C, 1100°C et 1200°C) a été réalisée. La température a été mesurée par thermocouple.

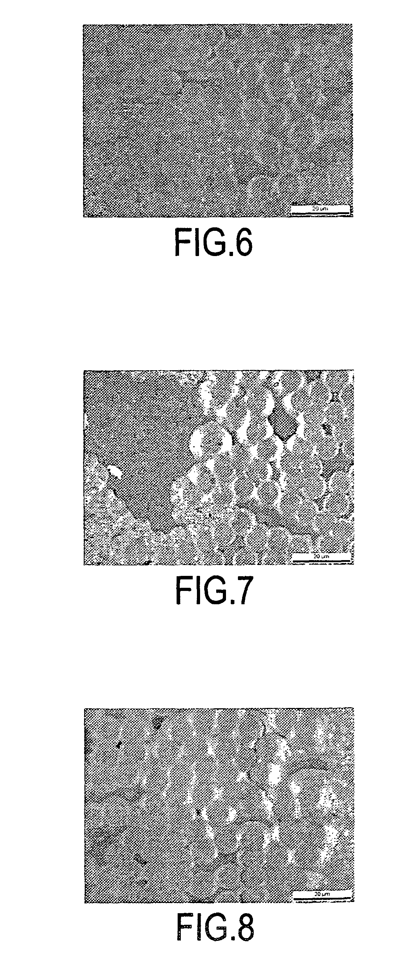

Quelle que soit cette température, un dépôt solide est observé, gainant chaque fibre de carbone du substrat. Des images de microscopie optique prises au coeur du substrat pour les différentes températures T de 1000°C, 1100°C et 1200°C (figures 6, 7, 8 respectivement), montrent la présence de ce dépôt autour de chaque fibre. La microscopie optique a permis de déterminer que le dépôt est formé de carbone de type laminaire rugueux.

On constate que la densification du substrat est améliorée lorsque la température à coeur augmente. La prise de masse du substrat après l'infiltration est indiquée sur le tableau 1. Cette variation de masse a tendance à augmenter avec la température fixée lors de l'infiltration. Les images morphologiques montrent aussi la présence d'un carbone spongieux dans les pores du substrat.

**Tableau 1**

| Températures (°C) | Masse initiale du substrat (g) | Masse après infiltration (g) | Gain de masse (g) | Gain de masse (%) |
|---|---|---|---|---|
| 1000 | 1.04 | 1.62 | 0.58 | 55 |
| 1100 | 1.01 | 1.53 | 0.52 | 52 |
| 1200 | 1.15 | 2.19 | 1.04 | 90 |

### Exemple 2

On a procédé comme dans l'exemple 1 avec chauffage du substrat jusqu'à la température T de 1000°C au coeur du substrat.

Trois cycles d'infiltration de 10 minutes à cette température ont été réalisés. Entre deux cycles d'infiltration, il a été attendu que le four refroidisse jusqu'à la température ambiante, puis, le four a été vidé et du méthane a été introduit à la pression initiale de 5 MPa.

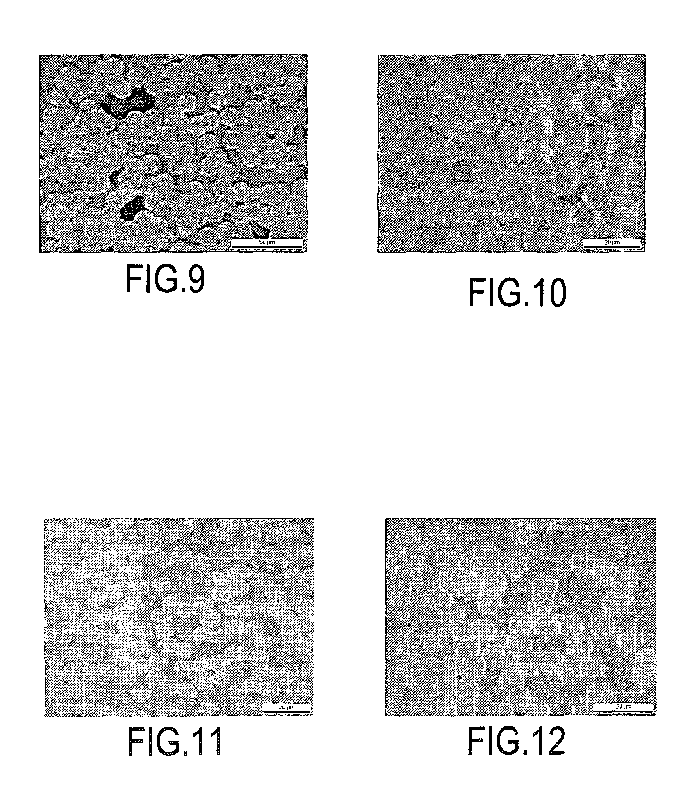

Quelle que soit la durée d'infiltration, un dépôt solide de carbone est observé, gainant les fibres de carbone. Des images de microscopie optique effectuées au coeur du substrat après les 3 cycles d'infiltration montrent la présence de ce dépôt de carbone autour de chaque fibre comme cela est visible sur les figures 9 et 10.

La densification du substrat est améliorée lorsque le nombre de cycles d'infiltration augmente, comme le montre le tableau 2, la première ligne du Tableau 2 reprenant les données de la première ligne du Tableau 1.

**Tableau 2**

| Nombre de cycles d'infiltration | Masse initiale du substrat (g) | Masse après infiltration (g) | Gain de masse (g) | Gain de masse (%) |
|---|---|---|---|---|
| 1 | 1.04 | 1.62 | 0.58 | 55 |
| 3 | 1.16 | 2.36 | 1.20 | 103 |

### Exemple 3

On a procédé comme dans l'Exemple 1, mais en utilisant une composition constituée d'un mélange de 6 % de méthane et 94 % de diazote (en volume).

La pression totale dans le four initiale a été fixée à 5 MPa et s'est élevée d'elle-même progressivement jusqu'à 8 MPa, de sorte que le méthane est resté à l'état supercritique pendant toute la durée de l'infiltration. Dès que la température désirée au centre du substrat a été obtenue (1000 °C), le temps de l'infiltration a été fixé à 10 minutes.

Un revêtement solide gainant chaque fibre de carbone et ayant une épaisseur de l'ordre de 500 nm a été constaté (figure 11). Le carbone spongieux observé figure 6 avec 100 % de méthane dans les mêmes conditions d'infiltration est absent comme le montre la figure 11. Ainsi, la diminution de la pression partielle de méthane dans le four, avec une même pression totale initiale de 5 MPa afin de conserver l'état supercritique du méthane, permet l'élaboration d'un revêtement de carbone homogène autour de chaque fibre.

### Exemple 4

On a procédé comme dans l'Exemple 2 mais en utilisant un réacteur de laboratoire du type de celui de la figure 4 permettant un chauffage isotherme du substrat.

Trois cycles d'infiltration ont été réalisés, à chaque fois d'une durée de 10 minutes après que la température désirée du substrat de 1000°C a été atteinte. La figure 12 montre qu'un dépôt solide de carbone entourant chaque fibre a été obtenu. La figure 12 montre aussi que lorsque le substrat est infiltré dans des conditions isothermes, le carbone spongieux est présent en quantité négligeable au coeur du substrat. La prise de masse est moindre que dans l'Exemple 2, comme le montre le Tableau 3. Toutefois, le revêtement de carbone autour de chaque fibre possède une épaisseur homogène, de l'ordre de 1 µm.

**Tableau 3**

| Chauffage substrat | Masse initiale du substrat (g) | Masse après infiltration (g) | Gain de masse (g) | Gain de masse (%) |
|---|---|---|---|---|
| Gradient Temp. (Exemple 2) | 1.16 | 2.36 | 1.20 | 103 |
| Isotherme (Exemple 4) | 0.45 | 0.80 | 0.35 | 78 |

### Exemple 5

On a utilisé un réacteur de laboratoire du type de celui de la figure 1 et de capacité volumique de 0,5 I pour la densification par une matrice d'un substrat poreux constitué par une tresse en fibres de carbone de masse égale à 0,21 g. Le précurseur utilisé était du tétraméthylsilane (TMS).

Une masse de 0,79 g de TMS a été introduite dans le réacteur avec de l'azote comme fluide de dilution (point critique de l'azote : P_{c} = 3,35 MPa et T_{c} = -147°C). La pression dans le four a été établie initialement à 4 MPa et s'est élevée d'elle-même progressivement jusqu'à 6,8 MPa, de sorte que l'azote est resté à l'état supercritique pendant toute la durée du processus d'infiltration. Le chauffage du substrat a été effectué avec une montée en température depuis la température ambiante jusqu'à une valeur de 560°C mesurée en fin du processus d'infiltration avec un thermocouple placé à proximité du substrat fibreux (environ 2 mm), la durée totale du processus étant de 95 minutes.

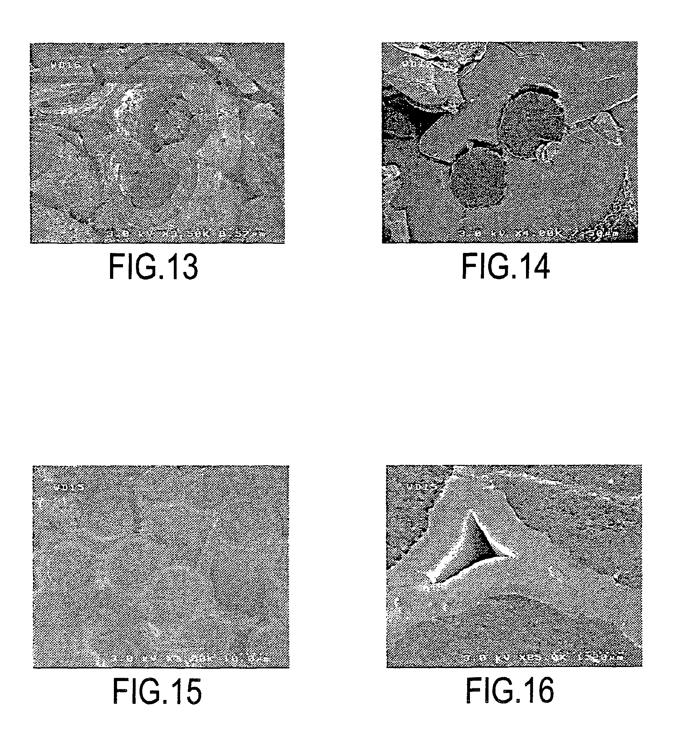

On a alors observé que la totalité du TMS a été consommée. La masse de dépôt mesurée (augmentation de masse du substrat) était de 0,52 g. Les figures 13 et 14 sont des micrographies prises au microscope électronique à balayage montrant le dépôt solide de matrice obtenu gainant les fibres de carbone.

L'analyse du dépôt par spectrométrie d'électrons Auger et diffraction de rayons X a montré qu'il était formé de carbure de silicium SiC, carbone libre C et nitrure de silicium Si₃N₄ (montrant que l'azote s'est comporté comme gaz réactif).

### Exemple 6

On a procédé comme dans l'exemple 5, mais en utilisant un substrat poreux constitué par une préforme fibreuse tridimensionnelle en carbone (obtenue par tissage 3D) d'une masse de 0,74 g.

Une masse de 0,54 g de TMS a été introduite dans le réacteur avec de l'azote à l'état supercritique comme fluide de dilution. Le processus d'infiltration a été réalisé sur une durée de 124 minutes, la pression s'élevant de 4,1 MPa à 6,7 MPa.

La masse de dépôt mesurée était de 0,17 g. Les figures 15 et 16 montrent le dépôt solide de matrice autour des fibres de la préforme. L'analyse du dépôt a montré qu'il était constitué de SiC et de carbone libre C (avec du carbone seul en couche externe de dépôt).

L'azote n'a pas agi comme fluide réactif.

Les exemples ci-avant montrent divers aspects remarquables du procédé d'infiltration chimique en phase supercritique selon l'invention :
- La durée nécessaire à la densification est remarquablement courte, à comparer avec des durées de plusieurs dizaines à plusieurs centaines d'heures requises pour les processus CVI classiques ;
- Une densification de substrat poreux fibreux à coeur avec enrobage de chaque fibre, densification qui est réalisée sous une pression de plusieurs MPa alors que, dans le cas des processus CVI classiques, on enseigne à l'homme de l'art de maintenir une pression très réduite (quelques kPa à quelques dizaines de kPa) pour éviter, si la pression est trop élevée, une formation privilégiée d'un dépôt de surface qui obture l'accès à la porosité interne du substrat ;
- Une faible pression partielle de gaz réactif, en milieu supercritique, privilégie un dépôt autour de chaque fibre et évite un dépôt dans les pores du substrat qui pourrait gêner l'accès à la porosité interne du substrat ;
- Plusieurs infiltrations à la suite améliorent la densification du substrat.

## Revendications

1. Procédé de densification d'un substrat fibreux poreux réfractaire par formation d'un dépôt solide de matrice réfractaire au sein de la porosité du substrat, le procédé comprenant la fourniture d'un substrat en fibres réfractaires, la disposition du substrat dans un réacteur, l'introduction dans le réacteur d'une composition fluide diffusée au sein du substrat et contenant au moins un fluide réactif précurseur du matériau constitutif du dépôt solide de matrice à former et, éventuellement, un fluide de dilution, et la diffusion de la composition fluide au sein du substrat pour former spontanément et directement le dépôt de matrice réfractaire à partir du fluide réactif précurseur sous forme d'un dépôt solide gainant les fibres, **caracterisé en ce que** le procédé est mis en oeuvre à une température et une pression permettant de maintenir à l'état supercritique dans le réacteur le fluide réactif et/ou le fluide de dilution éventuellement présent.

2. Procédé selon la revendication 1, dans lequel la formation du dépôt solide de matrice est réalisée à une température comprise entre 600°C et 1500°C.

3. Procédé selon la revendication 1, dans lequel la composition fluide contient au moins un fluide réactif précurseur du matériau constitutif du dépôt solide à former et un fluide de dilution, et le procédé est mis en oeuvre à une température et sous une pression permettant de maintenir au moins le fluide de dilution à l'état supercritique.

4. Procédé selon la revendication 3, dans lequel le fluide de dilution est neutre chimiquement vis-à-vis de la formation du dépôt solide.

5. Procédé selon la revendication 4, dans lequel le fluide de dilution est choisi parmi les gaz rares de l'atmosphère.

6. Procédé selon la revendication 3, dans lequel le fluide de dilution constitue en outre un fluide réactif pour la formation du dépôt solide.

7. Procédé selon la revendication 6, dans lequel le fluide de dilution est choisi parmi l'azote et le dioxyde de carbone.

8. Procédé selon la revendication 1, dans lequel le fluide réactif et le fluide de dilution sont maintenus à l'état supercritique.

9. Procédé selon la revendication 1, comprenant les étapes d'introduction d'une quantité de composition fluide dans une enceinte contenant le substrat et d'établissement dans l'enceinte de conditions de température et de pression permettant de former le dépôt solide tout en maintenant à l'état supercritique le fluide réactif et/ou le fluide de dilution éventuellement présent.

10. Procédé selon la revendication 1, comprenant les étapes d'admission continue d'un flux de composition fluide dans une enceinte contenant le substrat, d'extraction continue d'un flux de fluide effluent hors de l'enceinte et de maintien de conditions de température du substrat et de pression dans l'enceinte permettant de former le dépôt solide tout en maintenant à l'état supercritique le fluide réactif et/ou le fluide de dilution éventuellement présent.

## Claims

1. A method of densifying a refractory porous fiber substrate by forming a solid deposit of a refractory matrix within the pores of the substrate, the method including providing a substrate made of refractory fibers, arranging the substrate in a reactor, introducing into the reactor from a fluid composition diffused within the substrate and containing at least one reagent fluid that is a precursor for the material constituting the solid deposit of the matrix to be made, and optionally a dilution fluid, the fluid composition diffusing within the substrate to enable the deposit of the refractory matrix to form spontaneously and directly from the precursor reagent fluid as a solid deposit coating the fibers,
**characterized in that** the method is implemented at a temperature and a pressure that enable the reagent fluid and/or the optionally-present dilution fluid to be maintained in the supercritical state in the reactor.

2. A method according to claim 1, in which the solid deposit of the matrix is formed at a temperature lying in the range 600°C to 1500°C.

3. A method according to claim 1, in which the fluid composition contains at least one reagent fluid that is a precursor for the material constituting the solid deposit that is to be formed, together with a dilution fluid, and the method is implemented at a temperature and under a pressure that enable at least the dilution fluid to be maintained in the supercritical state.

4. A method according to claim 3, in which the dilution fluid is chemically inert relative to forming the solid deposit.

5. A method according to claim 4, in which the dilution fluid is selected from the rare gases of the atmosphere.

6. A method according to claim 3, in which the dilution fluid also constitutes a reagent fluid for forming the solid deposit.

7. A method according to claim 6, in which the dilution fluid is selected from nitrogen and carbon dioxide.

8. A method according to claim 1, in which the reagent fluid and the dilution fluid are both maintained in the supercritical state.

9. A method according to claim 1, including steps of introducing a quantity of fluid composition into an enclosure containing the substrate, and of establishing, within the enclosure, temperature and pressure conditions enabling the solid deposit to be formed, while maintaining the reagent fluid and/or the optionally-present dilution fluid in the supercritical state.

10. A method according to claim 1, comprising the steps of continuously admitting a stream of fluid composition into an enclosure containing the substrate, of continuously extracting a stream of effluent fluid from the enclosure, and of maintaining conditions of substrate temperature and of pressure within the substrate that enable the solid deposit to be formed while maintaining the reagent fluid and/or the optionally-present dilution fluid to be maintained in the supercritical state.

## Patentansprüche

1. Verfahren zur Verdichtung eines refraktären porösen Fasersubstrats durch Bildung einer festen Ablage aus refraktärer Matrix innerhalb der Substratporosität, wobei das Verfahren die Bereitstellung eines Substrats aus refraktären Fasern, die Anordnung der Substrate in einem Reaktor, die Einführung einer Fluidzusammensetzung in den Reaktor, die innerhalb des Substrats verbreitet wird und die mindestens ein reaktives Vorläuferfluid enthält, das aus dem Material besteht, das die zu bildende Ablage aus fester Matrix darstellt und gegebenenfalls ein Dilutionsfluid und die Diffusion der Fluidzusammensetzung innerhalb des Substrats umfaßt, um spontan und direkt die Ablage aus refraktärer Matrix zu bilden, ausgehend von dem reaktiven Vorläuferfluid in Form einer festen Ablage, die die Fasern umhüllt, **dadurch gekennzeichnet, daß** das Verfahren bei einer Temperatur und unter einem Druck durchgeführt wird, die/der es ermöglicht, in dem Reaktor den überkritischen Zustand des reaktiven Fluids und/oder des gegebenenfalls vorhandenen Dilutionsfluids zu erhalten.

2. Verfahren nach Anspruch 1, wobei die Bildung der festen Ablage aus Matrix bei einer Temperatur im Bereich zwischen 600 °C und 1.500 °C ausgeführt wird.

3. Verfahren nach Anspruch 1, wobei die Fluidzusammensetzung mindestens ein reaktives Vorläuferfluid, das die zu bildende Ablage darstellt und ein Dilutionsfluid enthält, und das Verfahren bei einer Temperatur und unter einem Druck durchgeführt wird, die/der es ermöglicht, mindestens das Dilutionsfluid in überkritischem Zustand zu erhalten.

4. Verfahren nach Anspruch 3, wobei das Dilutionsfluid gegenüber der Bildung der festen Ablage chemisch neutral ist.

5. Verfahren nach Anspruch 4, wobei das Dilutionsfluid aus den Inertgasen der Atmosphäre ausgewählt ist.

6. Verfahren nach Anspruch 3, wobei das Dilutionsfluid ferner ein reaktives Fluid für die Bildung der festen Ablage darstellt.

7. Verfahren nach Anspruch 6, wobei das Dilutionsfluid aus Stickstoff und Kohlendioxid ausgewählt ist.

8. Verfahren nach Anspruch 1, wobei das Reagenzfluid und das Dilutionsfluid in überkritischem Zustand erhalten werden.

9. Verfahren nach Anspruch 1, das die Schritte des Einführens einer Menge an Fluidzusammensetzung in einen Behälter, der das Substrat enthält, und die Festlegung von Temperatur- und Druckbedingungen in dem Behälter umfaßt, die es ermöglichen, die feste Ablage zu bilden und dabei gleichzeitig das reaktive Fluid und/oder das gegebenenfalls vorhandene Dilutionsfluid in überkritischem Zustand zu erhalten.

10. Verfahren nach Anspruch 1, das die Schritte des kontinuierlichen Einlasses eines Stroms aus Fluidzusammensetzung in einen Behälter, der das Substrat enthält, die kontinuierliche Extraktion eines aus dem Behälter abfließenden Stroms und die Erhaltung von Temperaturbedingungen des Substrats und Druckbedingungen in dem Behälter umfaßt, die es ermöglichen, die feste Ablage zu bilden und dabei gleichzeitig das reaktive Fluid und/oder das gegebenenfalls vorhandene Dilutionsfluid in überkritischem Zustand zu erhalten.
